# EUROPÄISCHE PATENTANMELDUNG

(11) **EP 3 016 334 A1**
(43) Veröffentlichungstag der Anmeldung: **04.05.2016**
(21) Anmeldenummer: 15191390.2
(22) Anmeldetag: 26.10.2015
(51) Int. Cl.: H04L 12/931

(54) **MODULARES ROUTERSYSTEM UND VERFAHREN ZUR VERÄNDERUNG EINER HARDWARESEITIGEN ROUTERKONFIGURATION**

(30) Priorität: 28.10.2014 DE 102014115678
(71) Anmelder: Insys Microelectronics GmbH, 93049 Regensburg (DE)
(72) Erfinder: Langhammer, Thomas, 93057 Regensburg (DE); Kress, Michael, 93047 Regensburg (DE); Brunner, Markus, 93080 Pentling-Matting (DE); Tomahogh, Christian, 93047 Regensburg (DE)
(74) Vertreter: Hannke, Christian

(57) **Zusammenfassung**

Die Erfindung betrifft ein Routersystem zur Übertragung von Daten zwischen mindestens zwei verschiedenen Datennetzen, umfassend ein auf ein standardisiertes Trägersystem aufbringbares Gehäuse, wobei das Gehäuse ein Führungs- und/oder Haltesystem umfasst, in das mindestens zwei Routerkomponenten lösbar einschiebbar sind, und das Gehäuse weiterhin eine Kommunikationseinrichtung mit Schnittstellen zur Kommunikation der Routerkomponenten miteinander aufweist, wobei Schnittstellen komplementär zu Schnittstellen der mindestens zwei Routerkomponenten ausgebildet sind, und wobei mindestens zwei der lösbar einschiebbaren Routerkomponenten voneinander verschieden sind, wobei eine dieser Routerkomponenten eine Steuer-Routerkomponente ist und eine CPU zur Steuerung der Kommunikation der lösbar in das Gehäuse einschiebbaren Routerkomponenten aufweist und mindestens eine lösbar in das Gehäuse einschiebbare Routerkomponente mindestens eine von außerhalb des Gehäuses zugängliche Schnittstelle zur Übertragung von Daten mit mindestens einem Datennetz aufweist, wobei die mindestens zwei lösbar einschiebbaren Routerkomponenten gemeinsam mindestens zwei von außerhalb des Gehäuses zugängliche Schnittstellen zur Übertragung von Daten mit mindestens zwei Datennetzen aufweisen.

## Beschreibung

Die Erfindung betrifft ein Routersystem zur Übertragung von Daten zwischen mindestens zwei verschiedenen Datennetzen, umfassend ein auf ein standardisiertes Trägersystem aufbringbares Gehäuse, wobei das Gehäuse ein Führungs- und/oder Haltesystem umfasst, in das mindestens zwei Routerkomponenten lösbar einschiebbar sind, und das Gehäuse weiterhin eine Kommunikationseinrichtung mit Schnittstellen zur Kommunikation der Routerkomponenten miteinander aufweist, wobei Schnittstellen komplementär zu Schnittstellen der mindestens zwei Routerkomponenten ausgebildet sind. Weiterhin betrifft die Erfindung ein Verfahren zur Konfiguration eines solchen modularen Routersystems.

Als Router werden Geräte verstanden, die Datenpakete von einem in ein anderes oder in mehrere andere Netzwerke übertragen können. Router zur Verbindung mindestens zweier Datennetzwerke miteinander sind aus dem Stand der Technik bekannt. Dabei unterscheiden sich Router ja nach Anwendung teilweise sehr stark voneinander. Internetanbieter oder auch andere Unternehmen mit sehr großen internen Netzwerken und/oder sehr großem Datendurchsatz verwenden üblicherweise Hochleistungsrouter im 19-Zoll Format. Diese Router sind modular aufgebaut und benötigen aufgrund ihrer Leistungsfähigkeit üblicherweise eine aktive Kühlung und entsprechend leistungsfähige Netzteile.

Für den privaten Bereich, wo die Anbindung eines einzigen oder weniger Netzwerkteilnehmer mit einem externen Netzwerk (Internet) gewünscht wird, sind Router oft kompakte Geräte mit entsprechend geringer Leistungsfähigkeit. Sie umfassen oft eine Modemfunktionalität die die Verbindung über DSL oder Kabel mit dem Internet ermöglicht. Üblicherweise sind derartige Router in einem geschlossenen Gehäuse angeordnet um jeglichen hardwareseitigen Eingriff der oft unerfahrenen Nutzer zu erschweren. Modifikationen sind in der Regel nur softwareseitig durch den Nutzer oder auch per Fernwartung beispielsweise durch den Hersteller möglich.

Insbesondere bei professionellen Anwendungen verbreitet sich jedoch der Einsatz von Kommunikationsgeräten zur Datenübertragung sehr. Auch hier hat sich als Kommunikationsprotokoll weitgehend das Internet Protokoll (IP) durchgesetzt. Bei Verwendung des IP-Protokolls ist an jedem Übergangspunkt eines IP-Netzes in ein anders Netz ein Router erforderlich. Die professionelle Datenübertragungstechnik per IP-Protokoll findet zunehmend Anwendung in der Industrie, im Anlagenbau, in der Automatisierungstechnik, in der Gebäudeautomatisation, in der Energiewirtschaft (z.B. Smart Grid, Smart Metering, Elektromobilität und andere), in der Infrastruktur (z.B. Wasserver- oder -entsorgung), bei Bezahlsystemen, in medizintechnischen Geräten und vielen Bereichen mehr. Insbesondere auch in Bereichen der sogenannten kritischen Infrastrukturen nimmt die Verbreitung der IP-Kommunikation stark zu, wodurch auch die Anforderungen an die verwendeten Router kontinuierlich wachsen und sich ständig verändern. Insbesondere die sich schnell verändernden Anforderungen reduzieren die durchschnittliche Einsatzdauer der verwendeten Router, da neue Funktionen nur begrenzt softwareseitig durch entsprechende Updates hinzugefügt werden können. Hardwareseitig sind Anpassungen an neue Anforderungen an die Elektronik bei geschlossenen Systemen nicht möglich und machen häufig einen frühen Austausch der Router erforderlich. Da große modulare Systeme auf 19-Zoll-Basis jedoch aufgrund der Dimensionierung, der Komplexität, den Anschaffungs- und Wartungskosten unrentabel sind, wird üblicherweise der Austausch bestehender Router bei Änderungen der Anforderungen solchen Systemen vorgezogen.

Es ist daher Aufgabe der Erfindung ein modulares Routersystem bereitzustellen, dass möglichst kompakt ist, ohne aufwändige Peripheriegeräte z.B. zur Kühlung betrieben werden kann und sich auf verschiedene, sich ändernde Anforderungen anpassbar ist.

Weiterhin ist es Aufgabe der Erfindung ein Verfahren zur Konfiguration eines modularen Routersystems zur Übertragung von Daten zwischen mindestens zwei verschiedenen Datennetzen bereitzustellen.

Diese Aufgaben werden durch die Gegenstände der unabhängigen Patentansprüche 1 und 10 gelöst.

Ein erfindungsgemäßes Routersystem zur Übertragung von Daten zwischen mindestens zwei verschiedenen Datennetzen, umfasst ein auf ein standardisiertes Trägersystem aufbringbares Gehäuse, wobei das Gehäuse ein Führungs- und/oder Haltesystem umfasst, in das mindestens zwei Routerkomponenten lösbar einschiebbar sind. Das Gehäuse weist weiterhin eine Kommunikationseinrichtung mit Schnittstellen zur Kommunikation der Routerkomponenten miteinander auf, wobei Schnittstellen komplementär zu Schnittstellen der mindestens zwei Routerkomponenten ausgebildet sind. Insbesondere zeichnet sich ein solches Routersystem dadurch aus, dass mindestens zwei der lösbar einschiebbaren Routerkomponenten voneinander verschieden sind. Eine dieser verschiedenen Routerkomponenten ist Steuer-Routerkomponente und weist eine CPU zur Steuerung der Kommunikation der lösbar in das Gehäuse einschiebbaren Routerkomponenten auf. Mindestens eine lösbar in das Gehäuse einschiebbare Routerkomponente weist mindestens eine von außerhalb des Gehäuses zugängliche Schnittstelle zur Übertragung von Daten mit mindestens einem Datennetz auf. Mindestens zwei lösbar einschiebbaren Routerkomponenten gemeinsam weisen mindestens zwei von außerhalb des Gehäuses zugängliche Schnittstellen zur Übertragung von Daten mit mindestens zwei Datennetzen auf.

Durch das auf ein standardisiertes Trägersystem aufbringbare Gehäuse ist es möglich, den Router in bestehende Systeme mit entsprechenden Halterungen zu integrieren. Insbesondere haben sich für Elektronikkomponenten sogenannte Hutschienensysteme etabliert. Diese sind üblicherweise in Schränken angeordnet, so dass daran befestigte Elektronikkomponenten sicher vor äußeren Einflüssen und unberechtigtem Zugang geschützt werden können. Weit verbreitet sind standardisiert Trägersysteme nach DIN EN 60715, DIN EN 50022, DIN EN 50023, DIN EN 50024, DIN EN 50035 oder DIN EN 50045. In einer bevorzugten Ausführungsform des Routersystems ist das das standardisierte Trägersystem, auf das das Routergehäuse aufbringbar ist, ein Tragschienensystem mit einem sich in dessen Querrichtung erstreckenden Querschnittsprofil in Hutform bzw. U-Form mit nach außen weisenden Ansätzen an beiden Enden. Besonders bevorzugt handelt es sich um ein Trägersystem nach DIN EN 60715, DIN EN 50022, DIN EN 50023, DIN EN 50024, DIN EN 50035 oder DIN EN 50045. Eine Entsprechende, zu einem solchen Trägersystem kompatible Befestigungseinrichtung ist bevorzugt außenseitig auf dem Gehäuse auf der der Einschuböffnung für die Routerkomponenten gegenüberliegenden Seite des Gehäuses angeordnet. Dadurch ist es z.B. beim Einsetzen oder Austauschen der Routerkomponenten möglich, das Gehäuse rückseitig an dem standardisierten Trägersystem befestigt zu lassen und die Routerkomponenten auf der weiterhin zugänglichen Frontseite einsetzen, austauschen oder in ihrer Konfiguration oder Anordnung verändern zu können.

Innenseitig weist das Gehäuse ein Führungs- und/oder Haltesystem auf. Bei einem Führungssystem kann es sich beispielsweise um eine schubladenartige Aufnahme für eine einzelne Routerkomponente handeln. In einer bevorzugten Ausführungsform ist eine Grundplatte der Routerkomponente, beispielsweise deren Hauptplatine so dimensioniert, dass sie etwas schmaler ist als die Innenhöhe des Gehäuses, so dass sie in das Gehäuse eingeschoben werden kann. Um ein seitliches Verrutschen der Grundplatte und somit der gesamten Routerkomponente zu vermeiden, weist das Gehäuse innenseitig für jede Routerkomponente vier längliche Vorsprünge auf, die jeweils paarweise (bei beispielsweise senkrechter Anordnung der Grundplatte in dem Gehäuse) so an der oberen und unteren Gehäuseinnenseite nebeneinander parallel zueinander angeordnet sind, dass die Grundplatte der jeweiligen Routerkomponente zwischen diese Paare von Vorsprünge eingeschoben werden kann. Diese Paare von parallel zueinander verlaufenden Vorsprüngen bilden somit ein Schienensystem zur Führung der jeweiligen Routerkomponente.

Ist die jeweilige Routerkomponente soweit in das Gehäuse eingeschoben, dass sie eine Position erreicht hat, in der sie ihre Bestimmung erfüllen kann, wird sie bevorzugt durch einen Arretiermechanismus in dieser Position gehalten. Im einfachsten Fall könnte dies durch eine Steckverbindung erfolgen, über die auch die Datenverbindung mit anderen Routerkomponenten oder die Energieversorgung gewährleistet wird. Da sich diese Steckverbindung(en) jedoch bevorzugt auf der rückseitigen Gehäuseinnenwandung befinden und die Grundplatte der Routerkomponenten etwas kleiner dimensioniert ist als die entsprechende Weite des Gehäuses, hat die Routerkomponente etwas Spiel im Gehäuse, so dass sich eine zusätzliche Fixierung als vorteilhaft erwiesen hat, um eine sichere Datenübertragung zu gewährleisten und versehentliches Herausrutschen der Routerkomponente aus der Steckverbindung oder sogar aus dem Gehäuse zu vermeiden.

Als vorteilhaft hat sich eine Ausführungsform herausgestellt, in der die Routerkomponente eine Blende aufweist, die - sobald die Routerkomponente vollständig in das Gehäuse eingeschoben ist - mittels eines Arretiermechanismus mit dem Gehäuse verbindbar ist. Beispielsweise kann dies durch nach außen vorstehende Vorsprünge auf der Blende realisiert sein, die in entsprechende innenseitig im Gehäuse befindliche Vertiefungen eingreifen können. Bevorzugt sind dabei die Vertiefungen im Gehäuse als Durchbruch in der Gehäusewandung realisiert, so dass zum Lösen der Blende und somit der gesamten Routerkomponente die außen vorstehenden Vorsprünge auf der Blende von außen eingedrückt werden können, um die Routerkomponente dann verschieben zu können.

Bevorzugt ist auf der der Einschiebeöffnung gegenüberliegenden Seite des Gehäuses eine Kommunikationseinrichtung mit Schnittstellen zur Kommunikation der Routerkomponenten miteinander angeordnet. Diese Kommunikationseinrichtung befindet sich innenseitig im Gehäuse. Die Schnittstellen sind dabei komplementär zu Schnittstellen der mindestens zwei Routerkomponenten ausgebildet. Bei dieser Kommunikationseinrichtung (im Folgenden auch als "backplane" bezeichnet) handelt es sich bevorzugt um eine bevorzugt mehrlagige Leiterplatte, die neben den elektrischen Verbindungen auch die Schnittstellen zur Kommunikation mit den Routerkomponenten aufweist. Die Versorgungsleitungen umfassen mindestens Leitungen ausgewählt aus der Gruppe Versorgungsleitung, Leitung zur Weiterleitung der Versorgungsspannung, Systemleitung, Datenleitung, Applikationsleitung und Steuerleitung. Die elektrischen Verbindungen können dabei in einer Ausführungsform sternförmig von einer zentralen Komponente zu den übrigen Routerkomponenten geführt sein. Bevorzugt ist jedoch eine Ausführungsform als Bussystem. Dementsprechend sind Bussysteme bevorzugt und die Leitungen ausgewählt aus der Gruppe Versorgungsbus, Leitung zur Weiterleitung der Versorgungsspannung, Systembus, Datenbus, Applikationsbus und Steuerbus.

Die Schnittstellen zur Kommunikation der Routerkomponenten über die Kommunikationseinrichtung weisen bevorzugt eine Einrichtung auf, die die Position der Schnittstelle eindeutig definiert. Bevorzugt ist diese Position durch entsprechende positionsspezifische Merkmale im Leitungssystem realisiert. Die Einrichtung zur Definition der Position der Schnittstelle definiert bevorzugt lediglich die Schnittstelle, an der eine bestimmte Routerkomponente angeordnet ist und nicht die Routerkomponente selbst. In einer bevorzugten Ausführungsform umfasst die im Gehäuse angeordnete Kommunikationseinrichtung mindestens einen Systembus, einen Datenbus und einen Applikationsbus, sowie bevorzugt Steuerleitungen und mindestens eine Einrichtung zur Erzeugung eines Adresssignals auf.

Wesentlich für das modulare Routersystem ist, dass mindestens zwei der lösbar einschiebbaren Routerkomponenten voneinander verschieden sind. Eine dieser Routerkomponenten ist dabei zwangsläufig eine Steuer-Routerkomponente, die eine CPU zur Steuerung der Kommunikation der lösbar in das Gehäuse einschiebbaren Routerkomponenten aufweist. Die Steuerung der Kommunikation kann dabei die Kommunikation aller in das Gehäuse einschiebbaren Routerkomponenten oder auch nur eines Teils der Routerkomponenten beinhalten. Weist die Steuer-Routerkomponente selbst Schnittstellen zur Übertragung von Daten mit einem oder mehreren Datennetzwerken auf, dient die CPU gegebenenfalls auch zur Steuerung der Kommunikation der Steuer-Routerkomponente selbst. Es ist jedoch nicht ausgeschlossen, dass auch andere als die Steuer-Routerkomponente eine CPU aufweisen. Diese CPU ist jedoch ausschließlich für Prozesse auf der jeweiligen Routerkomponente oder dem dieser zugeordnetem Netzwerk verantwortlich. Sie übernimmt bevorzugt keine Steueraufgaben zur Steuerung der Kommunikation anderer Routerkomponenten oder der Routerkomponenten untereinander.

Weiterhin zeichnet sich das Routersystem durch mindestens eine weitere lösbar in das Gehäuse einschiebbare Routerkomponente aus, wobei die Kombination dieser Routerkomponente mit der Steuer-Routerkomponente zusammen mindestens zwei von außerhalb des Gehäuses zugängliche Schnittstellen zur Übertragung von Daten mit mindestens zwei Datennetzen aufweist. Wird beispielsweise durch die Steuer-Routerkomponente die Kommunikation mit dem Internet gewährleistet, kann durch die zweite einschiebbare Routerkomponente die Übertragung von Daten über ein Firmennetzwerk gewährleistet werden. Dazu ist eine Schnittstelle notwendig. Bei einer solchen von außerhalb des Gehäuses zugänglichen Schnittstelle kann es sich beispielsweise um Steckverbindungen, wie beispielsweise RJ-45 RJ-48, RJ-49 oder RJ-61, serielle Schnittstellen, USB-Verbindungen oder auch um drahtlose Kommunikationsverbindungen, wie beispielsweise WLAN, Bluetooth oder Mobilfunknetze handeln.

Die Steuer-Routerkomponente muss nicht zwangsläufig eine solche Schnittstelle zur Übertragung von Daten mit mindestens einem Datennetzwerk aufweisen. Es wäre auch möglich, dass diese Steuer-Routerkomponente lediglich die Kommunikation der übrigen Routerkomponenten untereinander und mit jeweiligen Netzwerken steuert. In einer bevorzugten Ausführungsform weist auch die Steuer-Routerkomponente mindestens eine von außerhalb des Gehäuses zugängliche Schnittstelle zur Übertragung von Daten mit mindestens einem Datennetz auf. In einer weiter bevorzugten Ausführungsform weist die Steuer-Routerkomponente sogar Schnittstellen zur Übertragung von Daten mit mehreren Datennetzen auf. Beispielsweise könnte es sich dabei um eine Verbindung mit dem Internet einerseits und beispielsweise LAN-Verbindungen über RJ45 handeln. Selbstverständlich ist hier eine Vielzahl von Gestaltungsmöglichkeiten offen, über die auf spezielle Anforderungen eingegangen werden kann. Beispielsweise könnte der Zugang zum Internet je nach örtlichen Gegebenheiten über ein Kabelmodem, ein DSL-Modem oder eine Mobilfunkverbindung hergestellt werden. Selbstverständlich ist die Modemfunktion dabei nicht zwingend notwendig, sondern könnte auch durch ein separates Gerät gewährleistet werden.

Wie bereits oben im Zusammenhang mit der Kommunikationseinrichtung bzw. der Backplane im Inneren des Gehäuses erwähnt wurde, erfolgt bevorzugt auch die Energieversorgung der einzelnen Routerkomponenten über die Backplane. Bevorzugt weist die Backplane daher ein elektrisches Energieversorgungsleitungssystem mit Schnittstellen zum Anschluss der Routerkomponenten auf, wobei mindestens eine der lösbar in das Gehäuse einschiebbaren Routerkomponenten eine Einrichtung zur Einspeisung der Energie in das Energieversorgungsleitungssystem aufweist. Durch diese bevorzugte Ausführungsform ist es nicht notwendig, dass das Gehäuse selbst eine Energieversorgungseinrichtung für die Routerkomponenten aufweisen muss. Vielmehr erfolgt die Energieversorgung aller Routerkomponenten über eine der Routerkomponenten selbst. Mittels der Energieversorgungsleitungssystems erfolgt die Verteilung der Energie auf alle weiteren Routerkomponenten. Die Schnittstelle, über die die Energieversorgung zu den übrigen Routerkomponenten gewährleistet wird, ist bevorzugt dieselbe Schnittstelle, über die auch der Datentransfer erfolgt. Es ist jedoch auch möglich, dass die Übertragung von Energie und die zur Übertragung von Daten örtlich getrennt voneinander über separate Schnittstellen erfolgt.

Weiter bevorzugt ist, dass die mindestens eine eine Einrichtung zur Einspeisung der Energie in das Energieversorgungsleitungssystem aufweisende lösbar in das Gehäuse einschiebbare Routerkomponente eine andere als die Steuer-Routerkomponente ist. Somit erfolgt die Energieversorgung der Steuer-Routerkomponente nicht direkt, beispielsweise von einem Transformator, sondern indirekt über eine weitere der einschiebbaren Routerkomponenten. Diese Ausführungsform hat sich als besonders vorteilhaft erwiesen, da so auch die Steuer-Routerkomponente besonders kompakt realisierbar ist, da auf Anschlüsse für die externe Stromversorgung verzichtet werden kann. Außerdem kann so gewährleistet werden, dass die Steuer-Routerkomponente mit der vergleichsweise anfälligen CPU nicht direkt mit der externen Stromversorgung verbunden ist. Schwankungen im Spannungsverlauf können somit besonders gut abgefangen werden und Schäden an der Steuer-Routerkomponente können äußerst wirkungsvoll vermieden oder zumindest reduziert werden. Außerdem kann durch diese Ausführungsform gewährleistet werden, dass auch die nur die CPU alleine oder die CPU-enthaltende Routerkomponente ausgetauscht werden kann, ohne dass gleichzeitig auch zwangsläufig das Netzteil ausgetauscht werden muss. Das Routersystem muss demnach mindestens eine einschiebbare Routerkomponente aufweisen, die an eine externe Energiequelle anschließbar ist, um das gesamte Routersystem einschließlich der Steuer-Routerkomponente mit Energie versorgen zu können. Werden bei einem modularen Routersystem mehr als eine weitere Routerkomponente verwendet, ist es möglich, dass mehr als eine Routerkomponente direkt mit der externen Stromversorgung verbunden ist. Dadurch kann gewährleistet werden, dass auch bei Ausfall einer Routerkomponente oder einer Stromversorgung das gesamte übrige Routersystem weiterhin mit Energie versorgt wird und somit in einem funktionsfähigen Zustand bleibt.

Zur Energieversorgung weist das Gehäuse bevorzugt neben der Einschuböffnung für die Routerkomponenten eine zusätzliche Öffnung auf, die auf einer anderen Oberfläche als die Einschuböffnung angeordnet ist. Diese zusätzlichen Öffnungen für die Energieversorgung können mit Blenden versehen sein, da nicht jede Routerkomponente direkt an das Energieversorgungssystem angeschlossen sein muss. Somit ergeben sich jedoch in Bezug auf die Energieversorgung des gesamten Systems mehrere Möglichkeiten, bei der - wie oben beschrieben - auch eine redundante Energieversorgung möglich ist. Außerdem ist es möglich, besonders energieintensive Routerkomponenten separat mit Strom (evtl. einer anderen, z.B. höheren, Spannung oder Stromstärke) zu versorgen.

Außerdem ist über diese zusätzlichen Öffnungen auch eine zusätzliche Kommunikation mit den jeweiligen Routerkomponenten möglich. Beispielsweise können über diese Öffnungen Ein-/Ausgabe- (I/O-) Signale ausgetauscht werden. Diese Kommunikation kann die Kommunikation über die frontseitig in der Blende angeordneten Schnittstellen ergänzen. Bevorzugt erfolgt über die zusätzlichen Öffnungen die Kommunikation mit Peripheriegeräten, die vergleichsweise selten vom Routersystem getrennt werden müssen. Beispielsweise kann über die zusätzlichen Öffnungen eine Übertragung von Schaltsignalen erfolgen, durch die beispielsweise eine Zustandsüberwachung oder sogar Steuerung für diese Peripheriegeräte über das Netzwerk möglich ist. Somit könnte beispielsweise die Zustandsüberwachung für Anlagen oder Geräte auf dem Firmengelände durch externe Mitarbeiter erfolgen. Denkbar wäre auch die Erfassung von Zustandsgrößen wie beispielsweise der Temperatur über entsprechende Sensoren. Außerdem ermöglicht ein solcher Zugang zum Routersystem, dass es voraussetzt durch das Servicepersonal (z.B. bei einer Fernwartung) vor Ort in einen bestimmten Zustand geschaltet zu werden.

Da - wie oben beschrieben - ein Routersystem mindestens eine Steuer-Routerkomponente aufweisen muss und darüber hinaus in der oben beschriebenen bevorzugten Ausführungsform die Steuer-Routenkomponente keinen zusätzlichen Zugang zur Stromversorgung aufweisen muss, ist es vorteilhaft, wenn das Gehäuse so konfiguriert ist, dass der Einschub, in den die Steuer-Routerkomponente eingeschoben werden muss, von keiner anderen Routerkomponente belegt werden kann. In einer bevorzugten Ausführungsform ist daher vorgesehen, dass das Führungs- und/oder Haltesystem des Gehäuses zur Aufnahme der lösbar in das Gehäuse einschiebbaren Routerkomponenten ein Schienensystem mit jeweils mindestens einer Schiene zum Führen der lösbar in das Gehäuse einschiebbaren Routerkomponenten von jeweils einer Einschiebeposition in die jeweils zugehörige Halteposition umfasst, wobei die mindestens eine Schiene einer ersten Einschub- und/oder Halteposition in ihrer geometrischen Ausgestaltung von der Schiene oder den Schienen der anderen zweiten Einschub- und/oder Halteposition verschieden ist. Dabei ist die mindestens eine Schiene dieser ersten Einschub- und/oder Halteposition komplementär zu mindestens einer Führungseinrichtung der Steuer-Routerkomponente ausgebildet. Somit ist die Positionierung der Steuer-Routerkomponente im Gehäuse auf diese Position festgelegt. Dementsprechend ist es auch nicht möglich, in ein Gehäuse mehr als eine Steuer-Routerkomponente einzusetzen. Dadurch können Komplikationen, die durch das Vorhandensein von mehreren Steuer-Routerkomponenten entstehen könnten, ausgeschlossen werden. Außerdem ist gewährleistet, dass keine Routerkomponente außer der Steuer-Routerkomponente in die ausschließlich für die Steuer-Routerkomponente vorgesehene Position eingeschoben werden kann.

Wie oben beschrieben, muss das Routersystem mindestens eine Steuer-Routerkomponente (Master) und eine weitere Routerkomponente (Slave) umfassen. Eine besondere positive Eigenschaft eines solchen modularen Routersystems ist es jedoch, dass auch zusätzliche weitere Routerkomponenten (Slaves) aufgenommen werden können und so die Kommunikation mit einer Vielzahl von Datennetzen oder Netzwerkteilnehmern ermöglicht werden kann. In einer bevorzugten Ausführungsform ist das Gehäuse daher so ausgebildet, dass es zusätzlich zu der Steuer-Routerkomponente noch eine Vielzahl von weiteren Routerkomponenten aufnehmen kann. Weiter bevorzugt bestehen in Bezug auf die weiteren Routerkomponenten (Slaves) keine Einschränkungen in Bezug auf die Anzahl gleichartiger Routerkomponenten. Das Routersystem kann daher bevorzugt auch mehrere gleichartige lösbar in das Gehäuse einschiebbare Routerkomponenten umfassen. So ist es beispielsweise möglich, zwei Routerkomponenten einzusetzen, die jeweils mit einem Mobilfunknetz kommunizieren können. Dadurch ist es möglich, dass das Routersystem bei entsprechender Konfiguration der jeweiligen für die Verbindung zum Mobilfunknetz vorgesehenen Routerkomponenten mit zwei verschiedenen Mobilfunknetzen kommunizieren kann. So kann beispielsweise eine Verbindung zu einer IP-Gegenstelle über ein Mobilfunknetz hergestellt werden und dabei auf das schnellere, günstigere oder weniger belastete Mobilfunknetz zurückgegriffen werden. Sollte über dieses ausgewählte Mobilfunknetz ein Verbindungsaufbau scheitern, könnte auf ein alternatives Netzwerk, wie beispielsweise das über eine weitere Routerkomponente zugängliche Mobilfunknetz, ein Verbindungsaufbau versucht werden.

Um bei einem Austausch einzelner Routerkomponenten, beispielsweise bei deren Defekt, das Routersystem möglichst schnell wieder in Betrieb nehmen zu können, ist in einer bevorzugten Ausführungsform vorgesehen, dass die Konfigurationsdaten der einzelnen Routerkomponenten auf einer anderen Routerkomponente gespeichert werden können, um diese nach Austausch der defekten Routerkomponente auf diese übertragen zu können. Bevorzugt weist daher mindestens eine der lösbar in das Gehäuse einschiebbaren Routerkomponenten eine Speichereinrichtung zum Speichern der Konfigurationsdaten mindestens einer anderen, bevorzugt aller anderen lösbar in das Gehäuse einschiebbaren Routerkomponenten auf. Weiter bevorzugt können auf dieser Speichereinrichtung auch andere Daten, wie beispielsweise Firmwareupdates, abgelegt werden. So kann beispielsweise in einem Zeitintervall, in dem eine Routerkomponente nicht benötigt wird, ein Firmwareupdate durchgeführt werden. Bevorzugt befindet sich die Speichereinrichtung auf der Steuer- bzw. Master- Routerkomponente. Diese hat bevorzugt Zugriff und Schreibrechte auf alle übrigen Routerkomponenten, so dass von dieser Master- Routerkomponente aus die Konfiguration aller übrigen Routerkomponenten möglich ist.

Die Speichereinrichtung zum Speichern der Konfigurationsdaten muss dabei nicht zwangsläufig auf der jeweiligen Routerkomponente selbst angeordnet sein. Vielmehr ist es möglich, dass die Speichereinrichtung in dem Netzwerk lokalisiert ist, das mit der jeweiligen Routerkomponente, bevorzugt der Steuer-Routerkomponente, verbunden ist.

In einer weiteren bevorzugten Ausführungsform sind die Konfigurationsdaten auch in einem weiteren Datennetz und/oder einer weiteren Speichereinrichtung abgespeichert, das/die von dem/der zuvor beschriebenen Datennetz/ Speichereinrichtung verschieden ist. So ist nicht nur gewährleistet, dass die Konfigurationsdaten redundant vorliegen, sondern es ist auch der Zugriff auf die Konfigurationsdaten gewährleistet, falls die Routerkomponente ausfällt oder ausgetauscht werden soll, die sich in dem Netzwerk befindet, in dem auch die erste Speichereinrichtung angeordnet ist oder die selbst die Speichereinrichtung aufweist. Ist beispielsweise der Austausch der Steuer-Routerkomponente vorgesehen, die selbst eine Speichereinrichtung zum Speichern der Konfigurationsdaten aufweist oder mit einem Netzwerk verbunden ist, in dem eine solche Speichereinrichtung angeordnet ist, stünden sonst die Konfigurationsdaten nach Entfernen der Steuer-Routerkomponente aus dem Routersystem nicht mehr zur Verfügung. Wenn jedoch wie in der oben beschriebenen bevorzugten Ausführungsform die Konfigurationsdaten auch in einem anderen über die übrigen Routerkomponenten zugänglichen Netzwerk abgespeichert sind, kann auf diese über eine andere Routerkomponente zugegriffen werden und diese auf die Steuer-Routerkomponente übertragen werden. Somit ist es möglich, auch beim Austausch der Steuer-Routerkomponente die entsprechenden Konfigurationsdaten sehr schnell wieder aufzuspielen, um das Routersystem zeitnah wie gewohnt nutzen zu können.

Ein weiterer wesentlicher Aspekt der Erfindung ist ein Verfahren zur Konfiguration eines Routersystems zur Übertragung von Daten zwischen mindestens zwei verschiedenen Datennetzen. Dieses zeichnet sich insbesondere durch die Schritte aus:
a) Bereitstellen eines auf ein standardisiertes Trägersystem aufbringbares Gehäuse, wobei das Gehäuse ein Führungs- und/oder Haltesystem zum Führen und/oder Halten von mindestens zwei lösbar in das Gehäuse einschiebbaren Routerkomponenten sowie eine Kommunikationseinrichtung mit Schnittstellen zur Kommunikation der Routerkomponenten miteinander aufweist, wobei die Schnittstellen komplementär zu Schnittstellen der Routerkomponenten ausgebildet sind,
b) Auswahl der lösbar in das Gehäuse einschiebbaren Routerkomponenten, wobei mindestens zwei der lösbar einschiebbaren Routerkomponenten voneinander verschieden sind, wobei eine dieser Routerkomponenten eine Steuer-Routerkomponente ist und eine CPU zur Steuerung der Kommunikation der lösbar in das Gehäuse einschiebbaren Routerkomponenten aufweist und mindestens eine andere lösbar in das Gehäuse einschiebbare Routerkomponente mindestens eine von außerhalb des Gehäuses zugängliche Schnittstelle zur Übertragung von Daten mit mindestens einem Datennetz aufweist und die mindestens zwei lösbar einschiebbaren Routerkomponenten mindestens zwei von außerhalb des Gehäuses zugängliche Schnittstellen zur Übertragung von Daten mit mindestens zwei Datennetzen aufweisen, und
c) Einschieben der ausgewählten Routerkomponenten in das Gehäuse.

Durch dieses Verfahren ist es schnell und einfach möglich, ein Routersystem zu kreieren, das genau die Routerkomponenten umfasst, die für die spezifische Anwendung benötigt werden. Das Gehäuse wird dabei bevorzugt so ausgewählt, dass es genügend Einschübe für die ausgewählten Routerkomponenten aufweist. Üblicherweise wird das Gehäuse jedoch etwas größer ausgewählt, um bei zukünftigen Änderungen der Anforderungen Einschübe für weitere zusätzliche Routerkomponenten zur Verfügung zu haben. Diese aktuell unbenutzten Einschübe können durch Blenden verschlossen werden. Es ist somit möglich, ein Routersystem zusammenzustellen, das genau die Anforderungen erfüllt, die an dem jeweiligen Nutzungsort benötigt werden. Gleichzeitig bildet das Routersystem ein in sich geschlossenes System, das durch das Gehäuse und eventuelle Blenden nach außen abgeschlossen ist. Wie oben beschrieben, kann es sich bei dem standardisierten Trägersystem, an dem das Gehäuse und somit das gesamte Routersystem aufbringbar ist, um ein Hutschienensystem, beispielsweise nach DIN EN 60715, handeln. Dies ermöglicht eine besonders platzsparende Anordnung des Routersystems.

Durch das oben beschriebene Verfahren ist es einfach möglich, das Routersystem hardwareseitig auf die jeweiligen Ansprüche anpassen zu können. Um ein solches vorkonfiguriertes Routersystem nutzen zu können, wird das Verfahren bevorzugt durch die Schritte
d) Anlegen einer Energieversorgung an die Routerkomponenten und
e) Einbinden der Routerkomponenten in mindestens zwei verschiedene Datennetze ergänzt.

Weitere Vorteile, Ziele und Eigenschaften vorliegender Erfindung werden anhand anliegender Zeichnung und nachfolgender Beschreibung erläutert, in welchen beispielhaft ein modulares Routersystem oder einzelne Komponenten eines solchen Systems dargestellt und beschrieben ist/sind.

Komponenten, welche in den nachfolgenden Ausführungsbeispielen der einzelnen Figuren wenigstens im Wesentlichen hinsichtlich ihrer Funktion übereinstimmen, sind hierbei mit identischen jedoch jeweils um eine hunderter Reihe erhöhten Bezugszeichen gekennzeichnet, wobei diese Komponenten der Übersichtlichkeit halber nicht in allen Figuren beziffert und erläutert sein müssen.

In der Zeichnung zeigen:
- Figur 1: eine Ansicht auf ein Routersystem von schräg vorne;
- Figur 2: ein Routersystem mit in diesem Beispiel fünf Einschüben in einer Ansicht von schräg vorne;
- Figur 3: eine weitere Ansicht von schräg vorne auf das in Figur 2 gezeigte Routersystem;
- Figur 4: eine einzelne Slave-Routerkomponenten 5 in einer Ansicht von schräg vorne;
- Figur 5: eine andere einzelne Slave-Routerkomponenten 5 in einer Ansicht von schräg vorne;
- Figur 6: eine weitere einzelne Slave-Routerkomponenten 5 in einer Ansicht von schräg vorne,
- Figur 7: eine schematische Aufsicht auf ein Gehäuse eines Routersystems mit der darin angeordneten Backplane,
- Figur 8: eine schematische Aufsicht auf eine Steuer-Routerkomponente bzw. Master-Routerkomponente,
- Figur 9: eine schematische Aufsicht auf eine Slave-Routerkomponente,
- Figur 10: ein Verlaufsdiagramm zur Darstellung der Abläufe bei Einsetzen oder Austausch einer einzelnen Slave-Routerkomponente,
- Figur 11: ein Verlaufsdiagramm zur Darstellung der Abläufe bei Austausch der Steuer-Routerkomponente, und
- Figur 12: eine schematische Darstellung des Ablaufs der Konfiguration eines Routersystems.

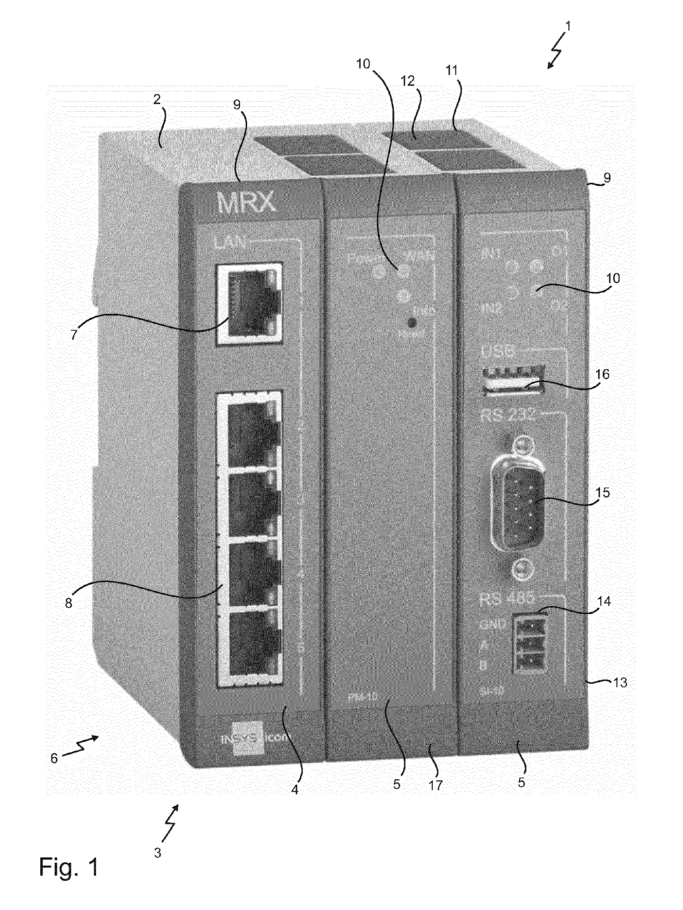

- Figur 1: zeigt eine Ansicht auf ein Routersystem 1 von schräg vorne. Zu erkennen ist das Gehäuse 2, in das in diesem Beispiel drei Routerkomponenten 3 eingeschoben sind. Bei den im Beispiel gezeigten Routerkomponenten 3 handelt es sich um eine Steuer-Routerkomponente 4, die im gezeigten Beispiel im am weitesten links angeordneten Einschubschacht des Gehäuses 2 platziert ist. In den beiden übrigen Einschubschächten in dem Gehäuse 2 ist jeweils eine Slave-Routerkomponente 5 angeordnet.

In dem gezeigten Beispiel weist die Master- bzw. Steuer-Routerkomponente 4 Schnittstellen zum Einbinden in Netzwerke auf. Bei den Anschlüssen handelt es sich in dem gezeigten Beispiel um RJ 45- Steckverbindungen, wobei eine einzeln angeordnete Steckverbindung 7 beispielsweise für die Verbindung zum Internet ausgelegt sein kann und die übrigen in dem Beispiel vier gezeigten Steckplätze 8 für die Verbindung mit Geräten eines local area network (LAN) vorgesehen sein können.

Von den jeweiligen Routerkomponenten 4, 5 sind jeweils nur Blenden 9 und eventuell darin angeordnete Schnittstellen oder Anzeigeelemente 10 zu erkennen. Die übrigen elektronischen Bauteile sowie eine Trägerplatine sind im Inneren des Gehäuses 2 angeordnet und durch dieses in Kombination mit der Blende 9 geschützt.

Das Gehäuse 2 weist Durchbrüche 11 auf, die in dem gezeigten Beispiel alle durch Abdeckungen 12 verdeckt sind. Durch diese Öffnungen 11 ist zusätzlich zu den frontseitigen Schnittstellen jeder Routerkomponente auch ein weiterer Zugang möglich. Dieser Zugang dient insbesondere der Stromversorgung einer einzelnen Routerkomponente 5 oder aller Routerkomponenten 4, 5 über die in Figur 1 nicht dargestellte Backplane 29. In dem gezeigten Beispiel ist zur besseren Übersichtlichkeit kein Anschluss zur Stromversorgung dargestellt.

Bei der rechts im Gehäuse 2 angeordneten Slave-Routerkomponente 13 handelt es sich um eine Routerkomponente 13 mit seriellen Schnittstellen. In dem gezeigten Beispiel weist diese eine RS 485-Schnittstelle 14, eine RS 232-Schnittstelle 15 und eine USB-Schnittstelle 16 auf. Über die als Leuchtdioden ausgeführten Kontrollelemente 10 kann ein Status der Routerkomponente oder einzelner dieser Anschlüsse angezeigt werden. Die in der Mitte zwischen der Steuer-Routerkomponente 4 und der mit seriellen Schnittstellen versehenen Slave-Routerkomponente 13 angeordnete weitere Slave-Routerkomponente 17 weist in dem gezeigten Beispiel keine eigenen Schnittstellen zur Verbindung mit Datennetzen auf. Bei dieser Routerkomponente 17 handelt es sich um ein Modul, das eine Statusinformation über die Energieversorgung und über die Verbindung mit einem WAN ermöglicht. In dem gezeigten Beispiel weist die Slave-Routerkomponente 17 ein (nicht gezeigtes) Netzteil auf und ist über die (ebenfalls nicht gezeigte) Verbindung zur Stromversorgung für die Energieverteilung auf alle übrigen Routerkomponenten zuständig.

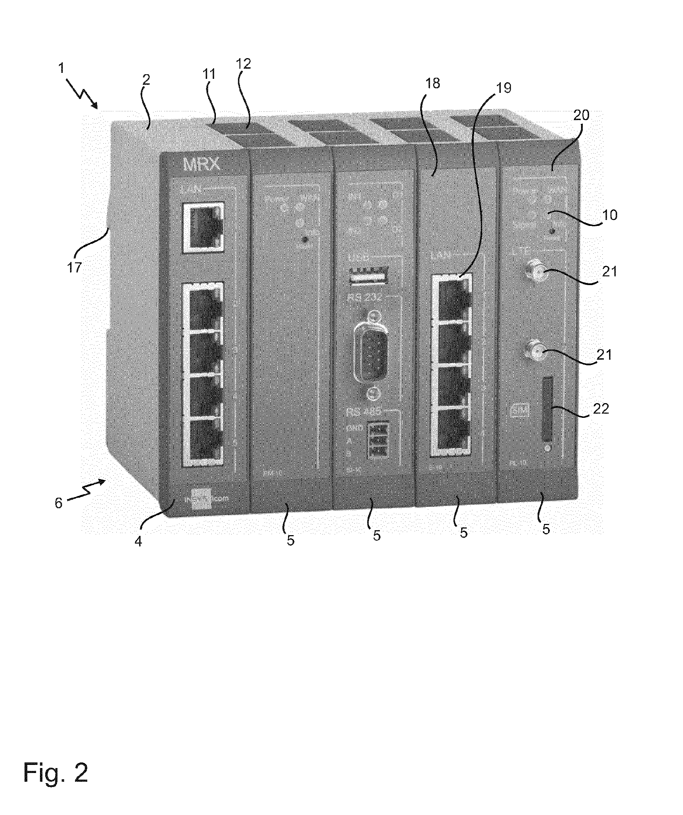

Figur 2 zeigt ein Routersystem 1 mit in diesem Beispiel fünf Einschüben in einer Ansicht von schräg vorne. Das Gehäuse 2 ist entsprechend größer dimensioniert als das in Fig. 1 dargestellte und weist einen Einschub für eine Steuer-Routerkomponente 4 sowie vier Einschübe für Slave-Routerkomponenten 5 auf. Im Bereich der drei links angeordneten Routerkomponenten 4, 5 ist das in Figur 2 gezeigte Beispiel identisch mit dem in Figur 1 gezeigten Beispiel, so dass auf die diesbezügliche Beschreibung verwiesen wird. Das Gehäuse weist auf der der Einschuböffnung bzw. den Blenden der Routerkomponente gegenüberliegenden Seite eine Halteeinrichtung 17 auf, mittels der es auf einer nicht gezeigten Hutschiene beispielsweise nach DIN EN 60715 befestigt werden kann. Das Gehäuse 2 weist im Bereich jedes Einschubs für Slave-Routerkomponenten 5 Öffnungen 11 auf, die für die Energieversorgung einer einzelnen Routerkomponente 5 oder auch aller Routerkomponenten 4, 5 genutzt werden kann. Wie auch in Figur 1, ist zur besseren Übersichtlichkeit keine Anbindung an die externe Energieversorgung gezeigt und alle Öffnungen 11 sind durch entsprechende Abdeckungen 12 verschlossen. Bei den gegenüber der Figur 1 neu hinzugekommenen Slave-Routerkomponenten 5 handelt es sich um eine Routerkomponente 18 zur Anbindung des Routers an ein local area network (LAN). Dieses weist in dem gezeigten Beispiel vier als Block 19 angeordnete Steckverbindungen vom Typ RJ-45 auf.

Bei der in dem Gehäuse 2 ganz rechts angeordneten Slave-Routerkomponente 20 handelt es sich um eine Routerkomponente 5 zur Anbindung des Routers 1 an ein Mobilfunknetz. Diese Routerkomponente 20 weist in dem gezeigten Beispiel zwei Anschlüsse 21 für Antennen sowie einen Einschub 22 zur Aufnahme einer SIM-Karte auf. Darüber hinaus sind auf der Blende 9 dieser Routerkomponente 20 Kontrollanzeigen 10 angeordnet. Diese können beispielsweise Informationen über die Energieversorgung, die Anbindung an ein WAN oder die Signalstärke des Mobilfunksignals liefern.

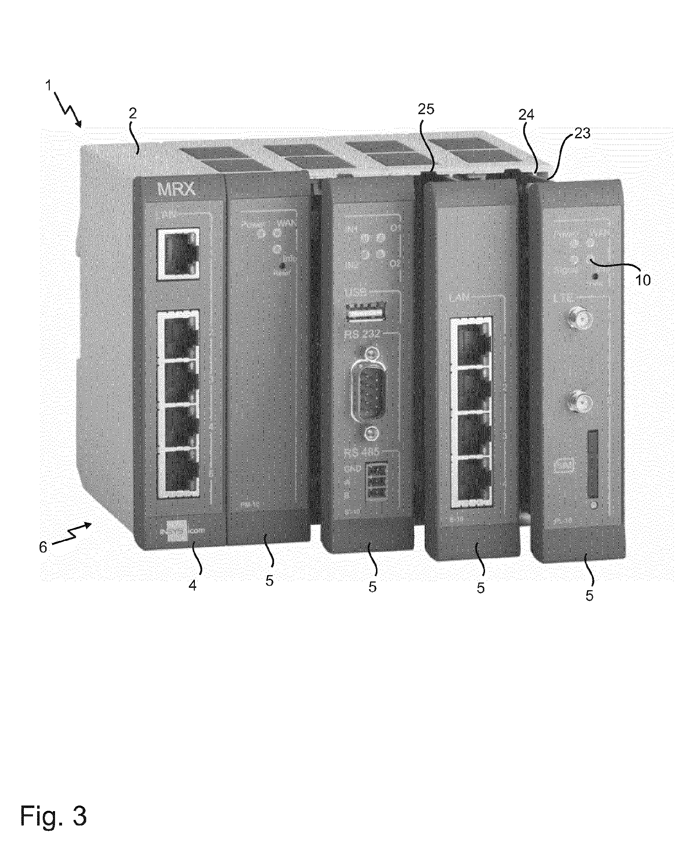

In Figur 3 ist eine weitere Ansicht von schräg vorne auf das in Figur 2 gezeigte Routersystem 1 dargestellt. Sowohl das Gehäuse 2 als auch die Routerkomponenten 4, 5 sind identisch zu der in Figur 2 gezeigten Abbildung. Im Gegensatz zu der in Figur 2 gezeigten Abbildung sind jedoch die drei rechts angeordneten Slave-Routerkomponenten 5 teilweise aus dem Gehäuse 2 herausgezogen. Dadurch soll der modulare Aufbau des Routersystems 1 verdeutlicht werden.

Darüber hinaus ist in dieser Darstellung zu erkennen, dass die jeweiligen Routerkomponenten 5 aus einer Blende 9 bestehen, die an eine Trägerplatine 23 angeordnet ist. Diese Trägerplatine 23 ist so dimensioniert, dass sie in das Gehäuse 2 eingeschoben werden kann. Um ein seitliches Verrutschen der Trägerplatine und somit der gesamten Routerkomponente 5 zu vermeiden, weist das Gehäuse innenseitig einen Vorsprung 24 auf, der so weit in das Innere des Gehäuses 2 hineinragt, dass er die Trägerplatine 23 hintergreifen und diese vor einem unerwünschten Verrutschen schützen kann. Der Vorsprung 24 ist dabei vorzugsweise als Schiene 24 ausgebildet, die sich parallel zu der Einschubrichtung der Routerkomponenten 4, 5 innenseitig über die gesamte Länge des Gehäuses erstreckt.

Außerdem sind in dieser Figur Ausnehmungen 25 in einer Gehäusefläche zu erkennen, in welche komplementäre (nicht dargestellte) Eingriffselemente der Blende 9 eingreifen können um diese am Gehäuse arretieren. Somit kann die Blende und mit ihr auch die gesamte Routerkomponente 4, 5 im Gehäuse 2 fixiert werden.

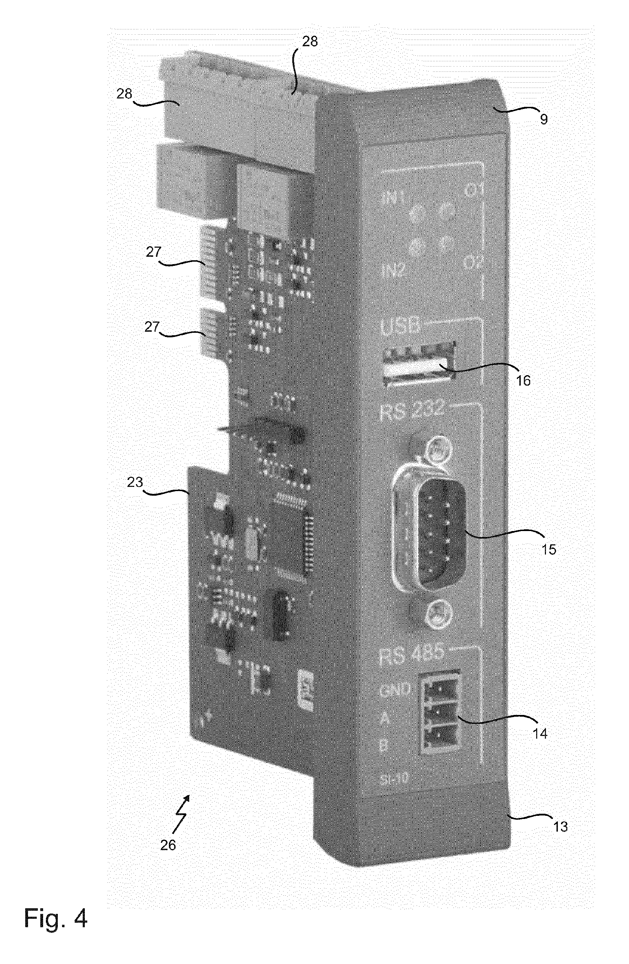

Die Figuren 4, 5 und 6 zeigen jeweils einzelne Slave-Routerkomponenten 5 in einer Ansicht von schräg vorne. Bei der in Figur 4 dargestellten Slave-Routerkomponente 5 handelt es sich um die Routerkomponente 13 mit seriellen Schnittstellen 14, 15 und 16. Es ist zu erkennen, dass die Blende 9 dieser Routerkomponente im Wesentlichen senkrecht zu der Platine 23 angeordnet ist, auf der die einzelnen elektrischen Bauteile 26 angeordnet sind. Außerdem ist in dieser Darstellung die Schnittstelle 27 zu erkennen, mittels der die Platine 23 und somit die gesamte Routerkomponente 13 mit der Backplane 29 im Inneren des Gehäuses verbunden werden kann. Die Backplane 29 weist dazu komplementär zu den Schnittstellen 27 ausgebildete Schnittstellen auf. In dem gezeigten Beispiel kann die Schnittstelle 27 in die auf der Backplane 29 angeordnete komplementäre Steckverbindung eingeschoben werden.

Außerdem sind in dieser Darstellung weitere Steckverbindungen 28 zu erkennen, die für die Stromversorgung dieser Routerkomponente 13 oder auch aller Routerkomponenten 4, 5 eines Routersystems 1 genutzt werden können. Außerdem ist über diese Steckverbindungen 28 auch die Übertragung von Schaltsignalen möglich. Dadurch ist eine Interaktion des Routersystems mit externen Peripheriegeräten möglich. So ist beispielsweise eine Zustandsüberwachung für diese Peripheriegeräte über das Netzwerk möglich. Außerdem wäre beispielsweise eine Temperaturkontrolle über einen entsprechenden Sensor möglich, der temperaturkritische Komponenten bei Überschreiten eines Temperaturgrenzwertes abschaltet. Weiterhin kann durch diese Eingänge auch das Routersystem in bestimmte Zustände gesetzt werden. Als Beispiel wäre hier die Fernwartung denkbar, die die Anwesenheit von Servicepersonal vor Ort voraussetzt durch das gewährleistet wird, dass sich das Routersystem in einem für die vorgesehene Fernwartung geeigneten Zustand befindet (z.B. keine kritische Datenkommunikation stattfindet).

Die Steckverbindungen 28 sind nicht auf der Blende 9 der Routerkomponente 13 angeordnet, sondern senkrecht zu dieser, so dass sie über die Öffnungen 11 im Gehäuse 2 zugänglich sind, sofern die Öffnungen 11 nicht durch die Abdeckungen 12 verdeckt werden. Wird eine solche Slave-Routerkomponente 13 über die Schnittstellen 28 an die externe Stromversorgung angeschlossen, kann sie über die Schnittstelle 27 mit der Backplane 29, die Energieversorgung für alle übrigen Routerkomponenten 4, 5, gewährleisten. Weisen einzelne Slave-Routerkomponenten 5, wie beispielsweise die in Figur 4 gezeigte serielle Slave-Routerkomponente 13 unter bestimmten Voraussetzungen einen besonders hohen Energieverbrauch auf, da sie beispielsweise Perhipheriegeräte ebenfalls mit Strom versorgen müssen, kann auch der Stromanschluss 28 der Routerkomponente 13 redundant ausgeführt sein, indem die Schnittstelle 28 beispielsweise doppelt verbaut wird. Beispielsweise kann so eine der Schnittstellen 28 für die Energieversorgung der Routerkomponente 13 und über die Backplane 29 auch aller weiteren Routerkomponenten 4, 5 genutzt werden, wohingegen die zusätzliche Schnittstelle 28 ausschließlich für die Energieversorgung der frontseitig an die serielle Slave-Routerkomponente angeschlossenen Peripheriegeräte genutzt wird.

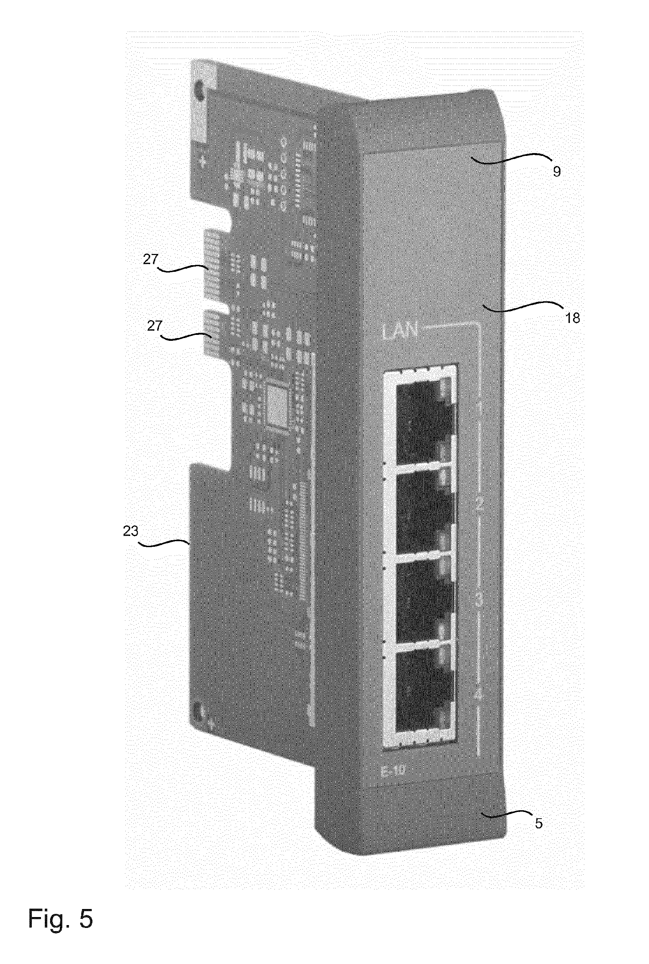

In Figur 5 ist eine Slave-Routerkomponente 5 in einer Ansicht von schräg vorne gezeigt. Diese Slave-Routerkomponente ist in dem gezeigten Beispiel als eine Routerkomponente 18 zur Anbindung des Routers an ein local area network (LAN) ausgeführt. Wie auch in Figur 4 kann in dieser Abbildung erkannt werden, dass die Blende 9 senkrecht zu der Platine 23 ausgerichtet ist. Ebenfalls ist die Steckverbindung 27 zur Anbindung der Routerkomponente 18 an die nicht gezeigte Backplane 29 gezeigt.

Im Gegensatz zu der in Figur 4 gezeigten Routerkomponente weist die in Figur 5 gezeigte Routerkomponente 18 keinen eigenen Anschluss an eine externe Stromversorgung auf. Die gezeigte Routerkomponente 18 ist somit nur über die Backplane 29 und die Schnittstelle 27 mit Energie versorgbar.

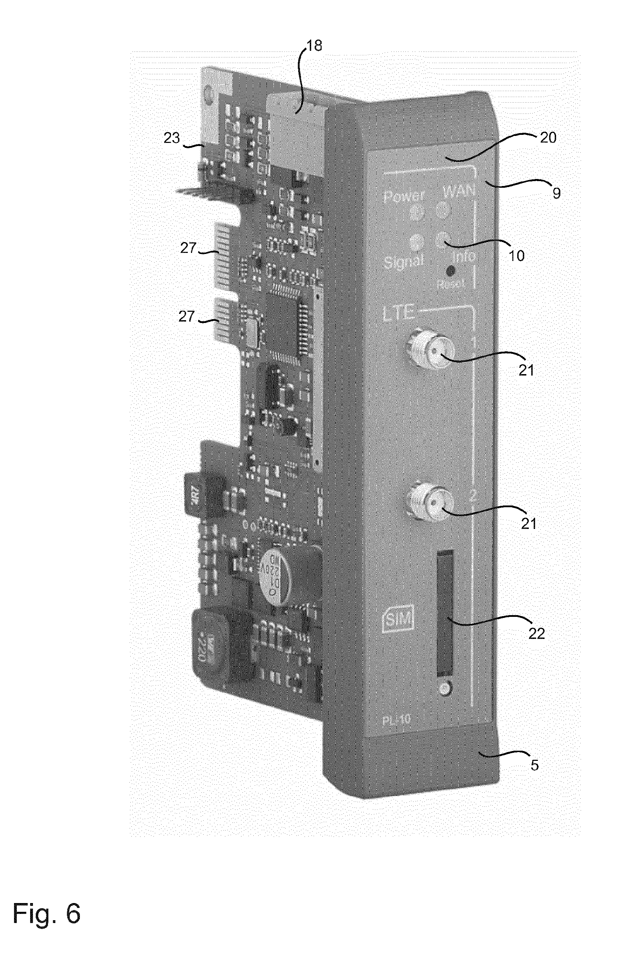

In Figur 6 ist die Slave-Routerkomponente 20 zur Anbindung des Routers an ein Mobilfunknetz in einer Ansicht von schräg vorne gezeigt. Wie auch in den Figuren 4 und 5 dargestellt, ist die Blende senkrecht zu der Platine 23 angeordnet. Wie bereits im Zusammenhang mit der Figur 2 beschrieben, weist die Blende 9 dieser Routerkomponente 20 Statusanzeigen 10 sowie Antennenanschlüsse 21 und einen Einschub 22 für eine SIM-Karte auf. Auf der Platine 23 ist eine Schnittstelle 28 zur Energieversorgung dieser Routerkomponente 20 und eventuell auch aller weiteren Routerkomponenten 4, 5 vorgesehen. Die Weiterleitung der über die Schnittstellen 28 zugeführten Energie an die übrigen Routerkomponenten 4, 5 erfolgt - wie bereits im Zusammenhang mit Figur 4 beschrieben - über die Schnittstelle 27 zur Backplane 29.

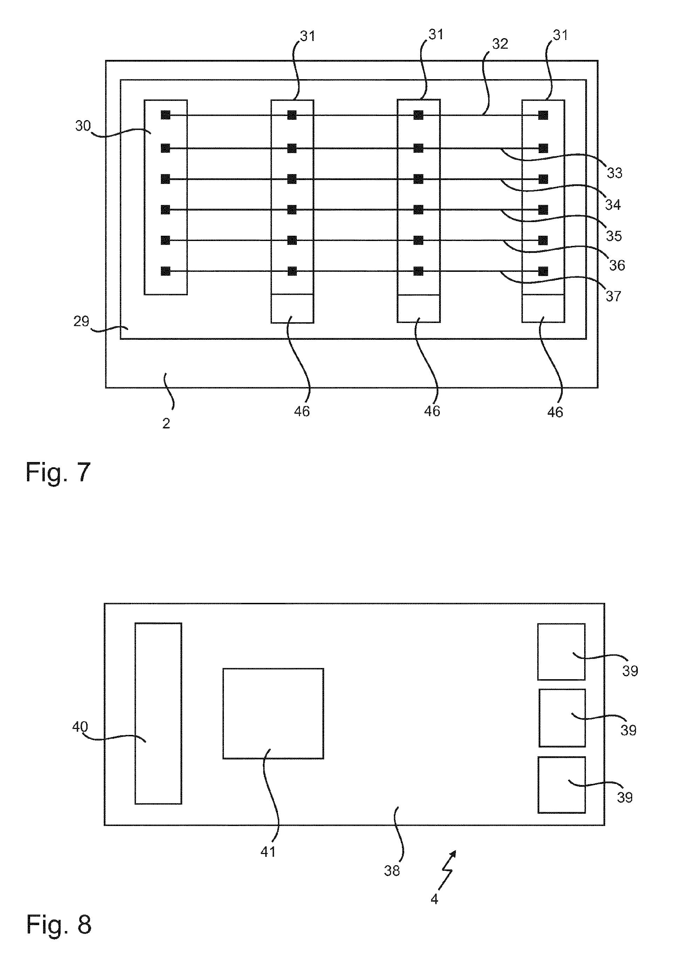

Figur 7 zeigt eine schematische Aufsicht auf ein Gehäuse 2 eines Routersystems 1 mit der darin angeordneten Backplane 29. Die Backplane 29 ist durch geeignete Mittel mit der Rückwand des Gehäuses 2 verbunden. Sie könnte beispielsweise mit diesem verklebt oder verschraubt sein, ist jedoch bevorzugt durch eine lösbare Klemmverbindung mit dem Gehäuse verbunden. Die Backplane 29 weist mehrere Steckplätze 30, 31 für einschiebbare Routerkomponenten 3 auf. Die Steckplätze 31 weisen dabei jeweils ein spezifisches Adresssignal 32 auf. Durch dieses Adresssignal 46 kann eine an diesem Steckplatz angeordnete Routerkomponente 5 gezielt adressiert werden. Für den Steckplatz 30 ist eine solche Adressierung nicht notwendig, da dieser Steckplatz ausschließlich für die Steuer-Routerkomponente 4 vorgesehen ist. Der Einschub von Slave-Routerkomponenten 5 in diese Position ist nicht möglich, da sich entweder der Steckplatz 30 oder das Schienensystem 23 dieser Position von den analogen Komponenten der für Slave-Routerkomponenten 5 vorgesehenen Steckplätze 31 unterscheidet.

Die einzelnen Steckplätze 30, 31 sind über ein Leitungssystem miteinander verbunden. Wie oben beschrieben, ist prinzipiell auch eine sternförmige Anbindung der Slave-Routerkomponenten 5 an die Steuer-Routerkkomponente 4 möglich, jedoch ist ein Bussystem bevorzugt. Dadurch ist eine schnellere Kommunikation beim Datentransfer zwischen Slave-Routerkomponenten 5 möglich. In Figur 7 sind die Verbindungsleitungen zwischen den einzelnen Steckplätzen 30 und 31 schematisch dargestellt. Das Leitungssystem setzt sich aus einzelnen Leitungen zusammen, die im gezeigten Beispiel einen Versorgungsbus 32, eine Leitung zur Weiterführung der Versorgungsspannung 33, einen Systembus 34, einen Datenbus 35, einen Applikationsbus 36 und Steuerleitungen 37 einschließen. An jedem der Steckplätze 30, 31 sind die Leitungen mit entsprechenden Schnittstellen des jeweiligen Steckplatzes 30, 31 verbunden, so dass eine Übertragung der jeweiligen Daten oder Ströme auf die dort angeordnete Routerkomponente 3 erfolgen kann.

Figur 8 zeigt schematisch eine Aufsicht auf eine Steuer-Routerkomponente bzw. Master-Routerkomponente 4. Die Basis für diese Komponente bildet eine Platine 38, auf der die einzelnen Bauteile dieser Routerkomponente 4 angeordnet sind. Die wichtigsten Komponenten einer Master-Routerkomponente 4 sind in Figur 8 schematisch dargestellt. Sie umfassen in dem gezeigten Beispiel die frontseitig angeordneten Schnittstellen 39 zu externen Netzwerken. Diese sind bei einer Steuer-Routerkomponente 4 jedoch optional. Essentiell sind hingegen die Schnittstelle 40 zur Anbindung an die Backplane 29 und eine zentrale Recheneinheit (CPU) 41. Diese CPU 41 der Steuer-Routerkomponente 4 übernimmt die Steuerung der Kommunikation der übrigen Routerkomponenten und auch die Konfiguration des gesamten Routersystems.

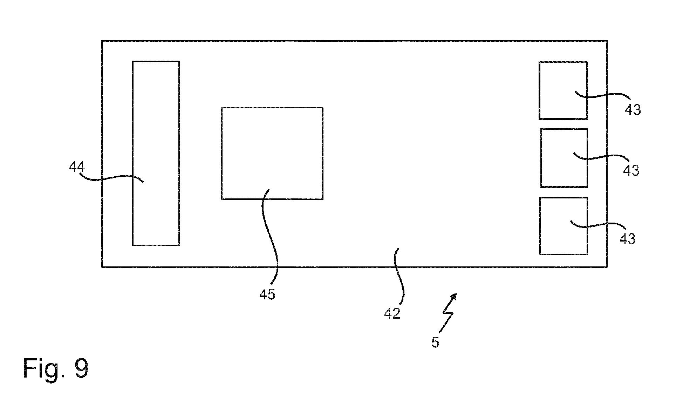

Figur 9 zeigt schematisch eine Aufsicht auf eine Slave-Routerkomponente 5. Eine solche Slave-Routerkomponente 5 weist ebenfalls eine Grundplatte in Form einer Platine 42 auf, auf der die einzelnen Bauteile angeordnet sind. Eine Auswahl der Bauteile ist in Figur 9 schematisch dargestellt. In der Figur rechts, was im eingeschobenen Zustand die Frontseite darstellt, sind die Schnittstellen 43 zu Netzwerken dargestellt. Im gezeigten Beispiel sind drei dieser Schnittstellen 43 gezeigt, es ist jedoch möglich, dass eine solche Slave-Routerkomponente 5 lediglich eine Schnittstelle zu einem Netzwerk, wie beispielsweise einem Mobilfunknetz, aufweist. Nach oben ist die Anzahl der Schnittstellen 43 zu Datennetzen lediglich durch die Dimension der in dieser Figur nicht gezeigten Frontplatte 9 limitiert. So kann eine solche Slave-Routerkomponente 5 Schnittstellen 43 zu mehreren Netzwerken aufweisen oder auch einen Switch umfassen, der mehrere Zugänge zu einem Netzwerk oder mehreren Netzwerken bietet.

Im linken Bereich der Figur 9 ist die Schnittstelle 44 zum Anschluss der schematisch dargestellten Routerkomponente 5 an die nicht gezeigte Backplane 29 dargestellt. Über diese Schnittstelle 44 erfolgt bevorzugt auch die Übertragung der notwendigen elektrischen Energie. Ist die Slave-Routerkomponente 5 nicht an eine externe Stromversorgung angeschlossen, kann sie über die Schnittstelle 44 über die Backplane 29 mit Strom versorgt werden. Wie oben beschrieben, ist jedoch bevorzugt mindestens eine der Slave-Routerkomponenten 5 an eine externe Stromversorgung angeschlossen, so dass diese elektrische Energie über die Schnittstelle 44 in die Backplane 29 einspeisen und somit für alle übrigen Routerkomponenten 3 zur Verfügung stellen kann. Der zum Anschluss einer Slave-Routerkomponente 5 an eine externe Stromversorgung notwendige zusätzliche Anschluss 28 ist in dieser schematischen Darstellung jedoch nicht gezeigt. Mit dem Bezugszeichen 45 ist eine auf der Platine 42 angeordnete Datenverarbeitungseinrichtung dieser Slave-Routerkomponente 5 beziffert, die jedoch nicht zwingend notwendig ist. Eine solche Datenverarbeitungseinrichtung 45 kann jedoch vorteilhaft sein und ist eventuell sogar für einige Netzwerke notwendig. Beispielsweise könnte eine solche Datenverarbeitungseinrichtung 45 das Einwählen und die Datenkommunikation über ein Mobilfunknetz steuern. Somit muss der damit verbundene Rechenaufwand nicht über die CPU 41 der Steuer-Routerkomponente 4 erfolgen und entlastet diese somit in Bezug auf die notwendige Rechenleistung. Außerdem kann durch eine zusätzliche Datenbearbeitungseinrichtung 45 auf Slave-Routerkomponenten 5 das über die Backplane 29 verlaufende Datenvolumen reduziert werden, da beispielsweise die oben beschriebenen Daten zur Einwahl in ein Mobilfunknetz nicht auf einer anderen Routerkomponente abgelegt sind und so der Verbindungsaufbau mit dem Mobilfunknetz nicht von dieser anderen Karte mit dem entsprechenden Datentransfer über die Backplane 29 gesteuert werden muss.

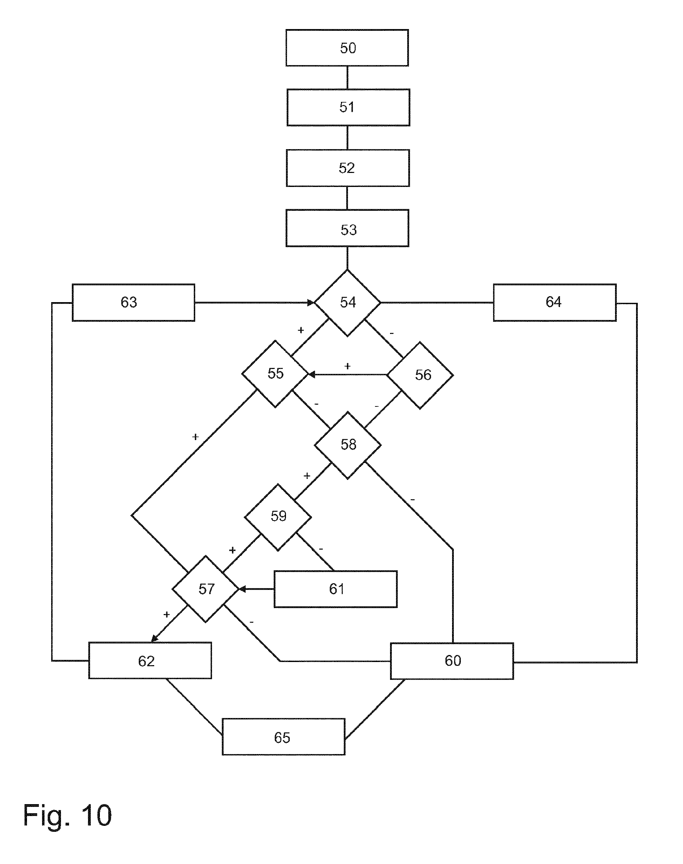

Figur 10 zeigt ein Verlaufsdiagramm, das die Abläufe in einem Router darstellt, wenn eine einzelne Routerkomponente ausgetauscht oder eine zusätzliche neue Routerkomponente eingesetzt wird. Da der Austausch oder das Einsetzen einer neuen Routerkkomponente im stromlosen Zustand erfolgen soll, wird bei Position 50 sichergestellt, dass sich der Router im stromlosen Zustand befindet. Falls er sich nicht im stromlosen Zustand befindet, wird er von der Stromquelle getrennt. Anschließend kann das Einsetzen oder Austauschen einer Routerkomponente erfolgen. Dies erfolgt bei Position 51. Bei der Routerkomponente handelt es sich um eine Slave-Routerkomponente. Ist diese Routerkomponente eingesetzt bzw. ausgetauscht, wird bei Position 52 der Router wieder mit dem Stromnetz verbunden. Dies sorgt zunächst dafür, dass die Steuer-Routerkomponente oder Master-Routerkomponente gestartet wird. Sobald die Master-Routerkomponente gestartet ist, erfolgt von ihr eine Abfrage der einzelnen Schnittstellen der back plane, um festzustellen, ob an diesen jeweils eine Slave-Routerkomponente angeschlossen ist. Weiterhin wird bei dieser Abfrage auch festgestellt, welche der Slave-Routerkomponenten genau an der jeweiligen Schnittstelle angeschlossen ist. An Position 54 erfolgt eine Prüfung, ob im System bereits Konfigurationsdaten für die neu eingesetzte Karte vorhanden sind. Ist dies der Fall, schließt sich bei Position 55 eine Prüfung an, bei der ermittelt wird, ob die Firmware der neu eingesetzten Routerkomponente aktuell ist. Sollte die bei Position 54 vorgenommene Prüfung auf vorhandene Konfigurationsdaten für die neu eingesetzte Routerkomponente negativ ausfallen, wird bei Position 56 zunächst überprüft, ob Konfigurationsdaten für die neu eingesetzte Routerkomponente in einem vom System erreichbaren Speicher vorhanden sind. Wenn die Konfigurationsdaten vorhanden sind, werden diese genutzt und bei Position 55 eine Prüfung auf die Aktualität der Firmware durchgeführt. Ist die vorhandene Firmware aktuell, erfolgt an Position 57 ein Test mit der aktuellen Firmware und den Konfigurationsdaten.

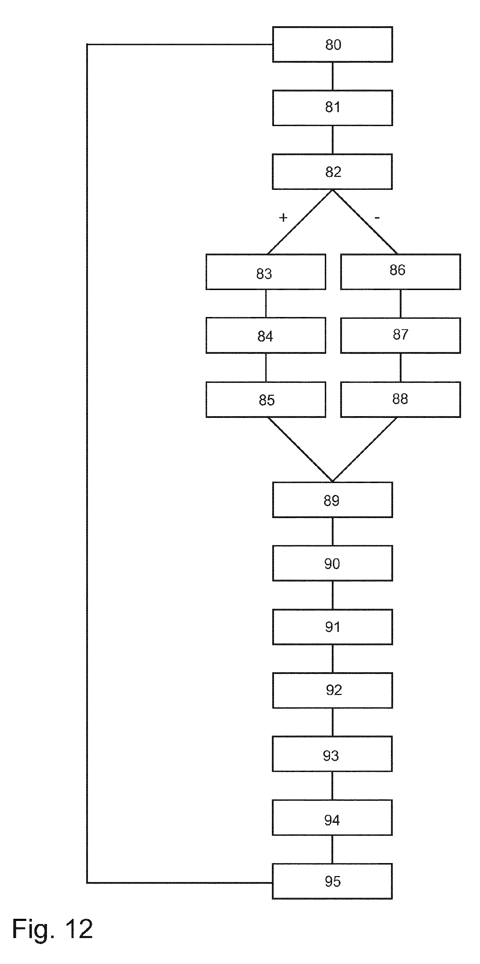

Verlaufen die Prüfungen an den Positionen 55 und/oder 56 negativ, wird zunächst bei Position 58 überprüft, ob eine aktuelle Firmware online oder in einer für den Router zugänglichen Speichereinrichtung verfügbar ist. Der Speicher könnte beispielsweise auch ein Speicher auf der Master-Routerkomponente sein, auf den zuvor eine aktuelle Firmware aufgespielt worden ist. Ergibt die Prüfung bei Position 58, dass keine aktuelle Firmware verfügbar ist, wird diese Karte bei Position 60 als "nicht betriebsbereit" eingestuft und eine entsprechende Information abgespeichert. Ergibt die Überprüfung auf die Verfügbarkeit einer aktuellen Firmware bei Position 58 ein positives Ergebnis, wird diese bei Position 59 auf die jeweilige Slave-Routerkomponente aufgespielt und überprüft, ob die bisherigen Konfiguration für diese Karte auch nach dem Firmwareupdate nutzbar ist. Ist dies möglich, erfolgt bei Position 57 ein Test dieser Routerkomponente. Sollte die bisherige Konfiguration nach dem FirmwareUpdate bei Position 59 als "nicht nutzbar" eingestuft werden, werden bei Position 61 Standardkonfigurationsdaten für diese Routerkomponente herangezogen, die zumindest Basisfunktionen dieser Routerkomponente gewährleisten sollen. Anschließend werden diese Einstellungen an Position 57 in einem Test überprüft. Ist das Testergebnis bei Position 57 negativ, wird bei Position 60 diese Routerkomponente als "nicht betriebsbereit" eingestuft und eine entsprechende Information im System abgespeichert. Ergibt der Test bei Position 57, dass die Karte betriebsbereit ist, wird diese Information bei Position 62 für die entsprechende Karte ebenfalls im System hinterlegt. Sofern es sich bei der jeweils überprüften Routerkomponente nicht um die letzte im Routersystem befindliche Routerkomponente n handelt, wird der Zähler n bei Position 63 um 1 erhöht und die Prüfung der nächsten Routerkomponente beginnt bei Position 54 erneut. Analog wird auch ausgehend von Position 60 verfahren, falls die jeweils überprüfte Routerkomponente nicht die letzte Routerkomponente im System ist. Auch hier wird der Zähler um 1 erhöht und die Überprüfung der nächsten Routerkomponente bei Position 54 durchgeführt. Ist die jeweils überprüfte Routerkomponente die letzte Routerkomponente im System, erfolgt bei Position 64 das Zusammenstellen der Ergebnisse der Überprüfung der einzelnen Routerkomponenten. Dieses Ergebnis kann beispielsweise als Zusammenfassung auf einer Weboberfläche dargestellt werden. Auf einer solchen Weboberfläche können dann durch einen Benutzer weitere Einstellungen und eventuell Änderungen in den Konfigurationen der einzelnen Routerkomponenten durchgeführt werden. In einer bevorzugten Ausführungsform erfolgt die Einstellung weiterer Konfigurationen über ein Schnellstart-Interface, einen sogenannten Wizard, dessen Funktionsweise im Zusammenhang mit Figur 12 genauer dargestellt ist.

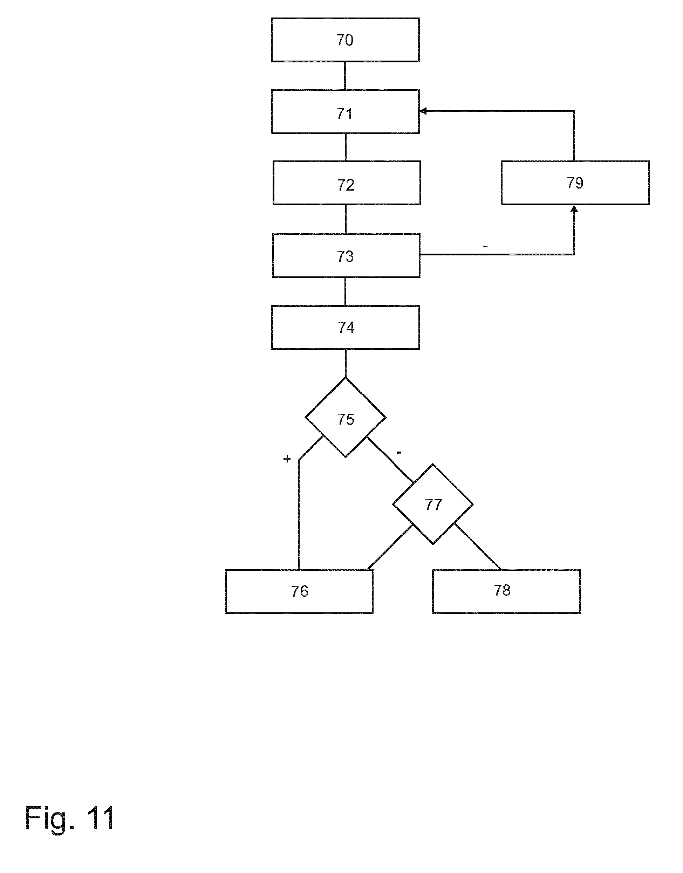

In Figur 11 ist schematisch dargestellt, wie der Austausch einer Steuer-Routerkomponente erfolgen kann. Bei Position 70 erfolgt zunächst das Speichern der Konfigurationsdaten auf einem Speicher außerhalb der Steuer-Routerkomponente. Die dabei gespeicherten Konfigurationsdaten umfassen mindestens die Konfigurationsdaten der Steuer-Routerkomponente, jedoch bevorzugt auch die Konfigurationsdaten aller übrigen Routerkomponenten. Anschließend erst wird das Routersystem von der Stromversorgung getrennt. Dies erfolgt beispielsweise durch Ausschalten oder Trennen von der Stromversorgung bei Position 71. Anschließend kann bei Position 72 im stromlosen Zustand die Steuer-Routerkomponente ausgetauscht werden. Bei Position 73 erfolgt im Anschluss die Wiederherstellung der Stromversorgung, wobei die Steuer-Routerkomponente selbstständig bootet und sich einem Selbsttest unterzieht. Verläuft der Selbsttest negativ, muss bei Position 79 eine neue Steuer-Routerkomponente bereitgestellt werden. Diese kann dann beginnend bei Position 71 in das Routersystem integriert werden.

Erfolgt der Selbsttest der Steuer-Routerkomponente bei Position 73 positiv, werden die zuvor bei Position 70 extern gespeicherten Konfigurationsdaten auf die neu eingesetzte Steuer-Routerkomponente übertragen. Anschließend wird bei Position 75 überprüft, ob diese alten Konfigurationsdaten auch im Zusammenspiel mit der neu eingesetzten Steuer-Routerkomponente nutzbar sind. Ist dies der Fall, kann bei Position 76 der Betrieb des Routers erfolgen.

Ergibt die Überprüfung, ob die bisherigen Konfigurationsdaten auch für die neu eingesetzte Steuer-Routerkomponente nutzbar sind, bei Position 75, dass dies nicht der Fall ist, müssen bei Position 77 neue Konfigurationsdaten eingegeben werden. Dies kann beispielsweise über eine Weboberfläche erfolgen. Die neuen Konfigurationsdaten werden anschließend überprüft. Verläuft dieser Test positiv, erfolgt bei Position 76 der Betrieb des Routers. Sollte dies nicht der Fall sein, wird bei Position 78 eine Fehlermeldung ausgegeben und eine erneute Eingabe von geänderten Konfigurationsdaten bei Position 77 ist notwendig.

Figur 12 zeigt den schematischen Ablauf der Konfiguration eines Routersystems über eine webbasierte Benutzeroberfläche. Bei Position 80 erfolgt der Start der Benutzeroberfläche, indem ein Nutzer diese im Routersystem gespeicherte Weboberfläche über ein damit verbundenes Netzwerk aufruft. Durch die Benutzeroberfläche werden dem Benutzer verschiedene Optionen zur Konfiguration des Routersystems angeboten. Sollte sich der Benutzer für eine manuelle Konfiguration des Routersystems entscheiden, kann er dies bei Position 94 vornehmen. Sollte er sich hingegen für die Nutzung einer Schnellstartfunktion entscheiden, wird diese bei Position 81 gestartet. Eine solche Schnellstartfunktion oder auch Wizard wird als entsprechende Funktion ebenfalls auf der Weboberfläche angeboten. Bei Position 82 wird seitens des Wizard im Routersystem abgefragt, ob mindestens eine Routerkomponente im System vorhanden ist, über das eine Datenverbindung zu einem Mobilfunknetz möglich ist. Ist eine solche Routerkomponente vorhanden, wird bei Position 83 dem Benutzer ein Vorschlag von mindestens einer Standardkonfiguration zum WAN-Zugang über ein Mobilfunknetz vorgeschlagen. Bei Position 84 wählt der Benutzer einen der vorgeschlagenen Konfigurationssätze aus. Anschließend erfolgt bei Position 85 die Abfrage und Eingabe von mobilfunknetzspezifischen Zugangsdaten.

Ergibt die Abfrage bei Position 82, dass keine Routerkomponente zum Datentransfer mit einem Mobilfunknetz geeignet ist, erfolgt bei Position 86 die Ausgabe von mindestens einem Vorschlag für mindestens eine Standardkonfiguration zum Zugang über ein kabelgebundenes Netzwerk. Bei Position 87 kann der Nutzer über die Benutzeroberfläche einen Vorschlag einer Standardkonfiguration auswählen. Anschließend kann er ebenfalls über die Benutzeroberfläche bei Position 88 Zugangsdaten für den kabelgebundenen Netzzugang eingeben.

Unabhängig davon, ob im Routersystem eine zur Datenkommunikation mit einem Mobilfunknetz geeignete Routerkomponente vorhanden ist, umfasst der in den Positionen 83 bzw. 86 seitens des Wizard vorgeschlagene Satz von Standardkonfigurationen in einer bevorzugten Ausführungsform jeweils mindestens einen Vorschlag für Standardkonfigurationen, der auch eine VPN-Verbindung beinhaltet.

Bei Position 89 erfolgt seitens des Wizard ein Vorschlag von mindestens einer Standardkonfiguration für die Zuweisung der Schnittstellen der Routerkomponenten zu mindestens einem local area network (LAN). Bei Position 90 kann der Benutzer über die Benutzeroberfläche eine Auswahl aus den entsprechenden Vorschlägen treffen. Sollten zusätzliche Zugangsdaten für den Zugang zu diesen LANs notwendig sein, werden diese bei Position 91 abgefragt. Anschließend erfolgt bei Position 92 seitens des Wizard eine Zusammenstellung eines Satzes von Konfigurationsdaten auf Basis der vom Benutzer getroffenen Auswahl an den Positionen 84 bzw. 87 und 90. Außerdem werden bei der Zusammenstellung der Konfigurationsdaten auch die Eingaben des Benutzers an den Positionen 85 bzw. 88 und 91 berücksichtigt. Daraufhin stellt der Wizard auf der Benutzeroberfläche die gewählten Konfigurationsdaten oder zumindest eine Auswahl daraus für den Benutzer dar. Nach Bestätigung der Daten durch den Benutzer erfolgt bei Position 94 das Abspeichern und Anwenden der Konfigurationsdaten auf dem Router. Dies kann sowohl auf Master- als auch auf Slave-Routerkomponenten erfolgen. Bevorzugt werden die gesamten Konfigurationsdaten auf der Master- bzw. Steuer-Routerkomponente abgespeichert. Die von den Slave-Routerkomponenten zur Kommunikation mit dem jeweils damit verbundenen Netzwerk bzw. Netzwerken Konfigurationsdaten können entweder direkt auf der jeweiligen Slave-Routerkomponente abgespeichert und von dieser angewendet werden oder auch bei jedem Verbindungsversuch mit dem jeweiligen Netzwerk von der Steuer-Routerkomponente zu der jeweiligen Slave-Routerkomponente übertragen werden. Bei Position 95 kann der Benutzer über eine eventuelle Veränderung der vom Wizard vorkonfigurierten Daten manuelle Änderungen vornehmen und anschließend speichern und aktivieren.

Sämtliche in den Anmeldungsunterlagen offenbarten Merkmale werden als erfindungswesentlich beansprucht, sofern sie einzeln oder in Kombination gegenüber dem Stand der Technik neu sind.

### Bezugszeichenliste

- 1: Routersystem
- 2: Gehäuse
- 3: Routerkomponente
- 4: Steuer-Routerkomponente
- 5: Slave-Routerkomponente
- 6: Schnittstellen
- 7: Steckverbindung
- 8: Steckplätze
- 9: Blende
- 10: Anzeigeelement
- 11: Durchbruch
- 12: Abdeckung
- 13: Slave-Routerkomponente mit serieller Schnittstelle
- 14: RS 485-Schnittstelle
- 15: RS 232-Schnittstelle
- 16: USB-Schnittstelle
- 17: Slave-Routerkomponente zur Statusinformation und Spannungsversorgung
- 18: Routerkomponente zur Anbindung an ein oder mehrere Ethernet-Netzwerke
- 19: Steckplatzblock
- 20: Routerkomponente zur Anbindung an ein Mobilfunknetz
- 21: Antennenanschluss
- 22: SIM-Karten-Einschub
- 23: Trägerplatine
- 24: Vorsprung / Schiene
- 25: Ausnehmung im Gehäuse
- 26: elektrisches Bauteil
- 27: Schnittstelle
- 28: Steckverbindung
- 29: Backplane
- 30: Steckplatz für Master- / Steuer-Routerkomponente
- 31: Steckplatz für Slave-Routerkomponente
- 32: Versorgungsbus
- 33: Leitung zur Weiterführung der Versorgungsspannung
- 34: Systembus
- 35: Datenbus
- 36: Applikationsbus
- 37: Steuerleitung / Steuerleitungsbündel
- 38: Platine der Master- / Steuer-Routerkomponente
- 39: frontseitige Schnittstelle
- 40: Schnittstelle zur Anbindung an die Backplane
- 41: zentrale Recheneinheit / CPU
- 42: Platine der Slave-Routerkomponente
- 43: Schnittstelle
- 44: Schnittstelle
- 45: Datenverarbeitungseinrichtung
- 46: Adresssignal

## Patentansprüche

1. Routersystem zur Übertragung von Daten zwischen mindestens zwei verschiedenen Datennetzen, umfassend ein auf ein standardisiertes Trägersystem aufbringbares Gehäuse, wobei das Gehäuse ein Führungs- und/oder Haltesystem umfasst, in das mindestens zwei Routerkomponenten lösbar einschiebbar sind, und das Gehäuse weiterhin eine Kommunikationseinrichtung mit Schnittstellen zur Kommunikation der Routerkomponenten miteinander aufweist, wobei Schnittstellen komplementär zu Schnittstellen der mindestens zwei Routerkomponenten ausgebildet sind, **dadurch gekennzeichnet, dass** mindestens zwei der lösbar einschiebbaren Routerkomponenten voneinander verschieden sind, wobei eine dieser Routerkomponenten eine Steuer-Routerkomponente ist und eine CPU zur Steuerung der Kommunikation der lösbar in das Gehäuse einschiebbaren Routerkomponenten aufweist und mindestens eine lösbar in das Gehäuse einschiebbare Routerkomponente mindestens eine von außerhalb des Gehäuses zugängliche Schnittstelle zur Übertragung von Daten mit mindestens einem Datennetz aufweist, wobei die mindestens zwei lösbar einschiebbaren Routerkomponenten gemeinsam mindestens zwei von außerhalb des Gehäuses zugängliche Schnittstellen zur Übertragung von Daten mit mindestens zwei Datennetzen aufweisen, wobei mindestens eine der lösbar in das Gehäuse einschiebbaren Routerkomponenten eine Speichereinrichtung zum Speichern der Konfigurationsdaten mindestens einer anderen, bevorzugt aller anderen lösbar in das Gehäuse einschiebbaren Routerkomponenten aufweist, um bei einem Austausch einer dieser anderen lösbar in das Gehäuse einschiebbaren Routerkomponenten diese Konfigurationsdaten auf die neu eingefügte Routerkomponente übertragen zu können.

2. Routersystem nach Anspruch 1, **dadurch gekennzeichnet, dass** auch die Steuer-Routerkomponente mindestens eine von außerhalb des Gehäuses zugängliche Schnittstelle zur Übertragung von Daten mit mindestens einem Datennetz aufweist.

3. Routersystem nach einem der vorangehenden Ansprüche, **dadurch gekennzeichnet, dass** das Gehäuse weiterhin ein elektrisches Energieversorgungsleitungssystem mit Schnittstellen zum Anschluss der Routerkomponenten aufweist, wobei mindestens eine der lösbar in das Gehäuse einschiebbaren Routerkomponenten eine Einrichtung zur Einspeisung der Energie in das Energieversorgungsleitungssystem aufweist.

4. Routersystem nach Anspruch 3, **dadurch gekennzeichnet, dass** die mindestens eine eine Einrichtung zur Einspeisung der Energie in das Energieversorgungsleitungssystem aufweisende lösbar in das Gehäuse einschiebbare Routerkomponente eine andere als die Steuer-Routerkomponente ist.

5. Routersystem nach einem der vorangehenden Ansprüche, **dadurch gekennzeichnet, dass** das Führungs- und/oder Haltesystem des Gehäuses zur Aufnahme der lösbar in das Gehäuse einschiebbaren Routerkomponenten ein Schienensystem mit jeweils mindestens einer Schiene zum Führen der lösbar in das Gehäuse einschiebbaren Routerkomponenten von jeweils einer Einschubposition in die jeweils zugehörige Halteposition umfasst, wobei die mindestens eine Schiene einer ersten Einschub- und/oder Halteposition in ihrer geometrischen Ausgestaltung von der Schiene oder den Schienen der anderen zweiten Einschub- und/oder Halteposition verschieden ist und die mindestens eine Schiene dieser ersten Einschubund/oder Halteposition komplementär zu mindestens einer Führungseinrichtung der Steuer-Routerkomponente ausgebildet ist und somit die Positionierung der Steuer-Routerkomponente im Gehäuse auf diese Position festgelegt ist.

6. Routersystem nach einem der vorangehenden Ansprüche, **dadurch gekennzeichnet, dass** das Gehäuse derart ausgebildet ist, dass es zusätzlich zu einer Steuer-Routerkomponente noch eine Vielzahl von weiteren Routerkomponenten aufnehmen kann, wobei das Routersystem auch mehrere gleichartige lösbar in das Gehäuse einschiebbaren Routerkomponenten umfassen kann.

7. Routersystem nach einem der vorangehenden Ansprüche, **dadurch gekennzeichnet, dass** die im Gehäuse angeordnete Kommunikationseinrichtung mindestens einen Systembus, einen Datenbus und einen Applikationsbus, sowie bevorzugt Steuerleitungen und mindestens eine Einrichtung zur Erzeugung eines Adresssignals umfasst.

8. Routersystem nach einem der vorangehenden Ansprüche, **dadurch gekennzeichnet, dass** das standardisierte Trägersystem ein Tragschienensystem mit einem sich in dessen Querrichtung erstreckenden Querschnittsprofil in Hutform bzw. U-Form mit nach außen weisenden Ansätzen an beiden Enden ist, bevorzugt ein Trägersystem nach DIN EN 60715, DIN EN 50022, DIN EN 50023, DIN EN 50024, DIN EN 50035 oder DIN EN 50045.

9. Verfahren zur Konfiguration eines Routersystems zur Übertragung von Daten zwischen mindestens zwei verschiedenen Datennetzen, **gekennzeichnet durc**h die Schritte:
a) Bereitstellen eines auf ein standardisiertes Trägersystem aufbringbares Gehäuse, wobei das Gehäuse ein Führungs- und/oder Haltesystem zum Führen und/oder Halten von mindestens zwei lösbar in das Gehäuse einschiebbaren Routerkomponenten sowie eine Kommunikationseinrichtung mit Schnittstellen zur Kommunikation der Routerkomponenten miteinander aufweist, wobei die Schnittstellen komplementär zu Schnittstellen der Routerkomponenten ausgebildet sind,
b) Auswahl der lösbar in das Gehäuse einschiebbaren Routerkomponenten, wobei mindestens zwei der lösbar einschiebbaren Routerkomponenten voneinander verschieden sind, wobei eine dieser Routerkomponenten eine Steuer-Routerkomponente ist und eine CPU zur Steuerung der Kommunikation der lösbar in das Gehäuse einschiebbaren Routerkomponenten aufweist und mindestens eine andere lösbar in das Gehäuse einschiebbare Routerkomponente mindestens eine von außerhalb des Gehäuses zugängliche Schnittstelle zur Übertragung von Daten mit mindestens einem Datennetz aufweist und die mindestens zwei lösbar einschiebbare Routerkomponenten mindestens zwei von außerhalb des Gehäuses zugängliche Schnittstellen zur Übertragung von Daten mit mindestens zwei Datennetzen aufweisen, und wobei mindestens eine der lösbar in das Gehäuse einschiebbaren Routerkomponenten eine Speichereinrichtung zum Speichern der Konfigurationsdaten mindestens einer anderen, bevorzugt aller anderen lösbar in das Gehäuse einschiebbaren Routerkomponenten aufweist,
c) Einschieben der ausgewählten Routerkomponenten in das Gehäuse,
d) Anlegen einer Energieversorgung an die Routerkomponenten, und
e) Übertragung der Konfigurationsdaten von der mindestens einen Routerkomponente, welche die Speichereinrichtung zum Speichern der Konfigurationsdaten der mindestens einen anderen Routerkomponente aufweist, auf die mindestens eine andere Routerkomponente.

10. Verfahren nach Anspruch 9, **gekennzeichnet durch** den weiteren Schritt:
f) Einbinden der Routerkomponenten in mindestens zwei verschiedene Datennetze.
